(19)

Europäisches
Patentamt

European
Patent Office

Office européen
des brevets

(11)  **EP 2 981 811 B1**

(12)  **FASCICULE DE BREVET EUROPEEN**

(45) Date de publication et mention
de la délivrance du brevet:
**20.03.2019 Bulletin 2019/12**

(21) Numéro de dépôt: **14718930.2**

(22) Date de dépôt: **04.04.2014**

(51) Int Cl.:
*G01N 21/95* *(2006.01)*     *G01R 31/26* *(2014.01)*
*G01N 21/66* *(2006.01)*

(86) Numéro de dépôt international:
**PCT/EP2014/056800**

(87) Numéro de publication internationale:
**WO 2014/161983 (09.10.2014 Gazette 2014/41)**

(54) **PROCEDE ET SYSTEME DE CONTROLE DE LA QUALITE D'UN DISPOSITIF PHOTOVOLTAIQUE**

VERFAHREN UND SYSTEM ZUR STEUERUNG DER QUALITÄT EINER FOTOVOLTAISCHEN
VORRICHTUNG

METHOD AND SYSTEM FOR CONTROLLING THE QUALITY OF A PHOTOVOLTAIC DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.04.2013 FR 1353055**

(43) Date de publication de la demande:
**10.02.2016 Bulletin 2016/06**

(73) Titulaire: **Commissariat à l'Énergie Atomique
et aux Énergies Alternatives
75015 Paris (FR)**

(72) Inventeur: **MABILLE, Loïc
71100 La Charmée (FR)**

(74) Mandataire: **Novaimo
ActiTech 8
60 avenue Marie Curie
Archamps Technopole
74166 Saint Julien-en-Genevois Cedex (FR)**

(56) Documents cités:
EP-A1- 2 343 534     EP-A1- 2 378 278
JP-A- 2008 026 113

- **CLAUS G ZIMMERMANN: "Performance Mapping
of Multijunction Solar Cells Based on
Electroluminescence", 1 août 2009 (2009-08-01),
IEEE ELECTRON DEVICE LETTERS, IEEE
SERVICE CENTER, NEW YORK, NY, US, PAGE(S)
825 - 827, XP011263984, ISSN: 0741-3106 page
826, colonne de droite; figure 1**
- **ZIMMERMANN C: "Utilizing lateral current
spreading in multijunction solar cells: An
alternative approach to detecting mechanical
defects", 26 juillet 2006 (2006-07-26), JOURNAL
OF APPLIED PHYSICS, AMERICAN INSTITUTE
OF PHYSICS, 2 HUNTINGTON QUADRANGLE,
MELVILLE, NY 11747, PAGE(S) 23714 - 023714,
XP012089468, ISSN: 0021-8979 pages 023714-2,
colonne de gauche**
- **N. Bosco et al.: "CPV Cell Infant Mortality Study",
7th International Conference on Concentrating
Photovoltaic Systems (CPV-7), Las Vegas,
Nevada, April 4-6, 2011 NREL/CP-5200-51337, mai
2011 (2011-05), pages 1-4, XP002727256, Extrait
de l'Internet:
URL:http://www.nrel.gov/docs/fy11osti/5133
7.pdf [extrait le 2014-07-15]**
- **GEOFFREY DUGGAN ET AL: "Evaluation of
competing triple junction concentrator cells by
electroluminescence", PHOTOVOLTAIC
SPECIALISTS CONFERENCE (PVSC), 2009 34TH
IEEE, IEEE, PISCATAWAY, NJ, USA, 7 juin 2009
(2009-06-07), pages 655-659, XP031626797, ISBN:
978-1-4244-2949-3**

**Description**

L'invention concerne un procédé et un système de contrôle de la qualité d'un dispositif photovoltaïque comprenant une cellule photovoltaïque assemblée à un substrat par l'intermédiaire d'une interface d'assemblage.

Une cellule photovoltaïque est un composant électronique qui, lorsqu'il est soumis à des rayonnements lumineux tels que ceux du Soleil, génère un courant électrique continu qui est fonction de l'intensité de la lumière incidente, et une tension continue qui est dépendante du spectre de cette lumière incidente. La cellule photovoltaïque est le plus souvent constituée d'un ou plusieurs matériaux semi-conducteurs, principalement à base de silicium, et plus rarement de séléniure de cuivre, de tellurure de cadmium. Elle peut aussi être constituée de matériaux des classes périodiques III et V du tableau de Mendeleïev tels que l'indium, le gallium, le phosphore, l'arsenic et autres. Elle se présente généralement sous la forme d'une plaque de faible épaisseur et de quelques millimètres à plusieurs centimètres de côté.

Plusieurs cellules peuvent être réunies dans un récepteur, module ou panneau solaire photovoltaïque et assemblées sur un substrat. Pour certaines applications telles que le domaine du photovoltaïque à concentration (connu sous le sigle CPV), la liaison entre les cellules photovoltaïques et le substrat est réalisée par une brasure métallique ou une résine époxy, entre autres.

Une cellule photovoltaïque ne convertit qu'une partie de la lumière incidente, entre 10 et 40% de celle-ci, selon la technologie utilisée. L'excédent d'énergie lumineuse, non converti en électricité, est converti en chaleur et produit un échauffement de la cellule. Pour éviter une surchauffe de celle-ci, le substrat est généralement assemblé à un dissipateur d'énergie. Ainsi, la cellule est montée au sommet d'une chaîne de dissipation thermique comprenant le substrat, la brasure et le dissipateur, destinée à dissiper la chaleur produite par l'énergie lumineuse non convertie en électricité.

L'interface d'assemblage entre la cellule photovoltaïque et le substrat est une zone particulièrement critique de cette chaîne thermique. En effet, lors de la conception de cette interface, par fusion de la brasure pour reprendre l'exemple précité, ou par solidification de la résine, des défauts tels que des trous d'air, couramment appelés « voids » (de l'anglais « voids » signifiant « lacunes »), peuvent se former. Ces défauts entraînent une rupture de la cohésion thermique et mécanique à l'endroit où l'air est emprisonné. Il en résulte une diminution de l'efficacité de la chaîne thermique et, à terme, des défaillances de la cellule, voire une destruction de celle-ci.

Il est donc important d'effectuer, en fin de processus de fabrication du récepteur, module ou panneau photovoltaïque, un contrôle de la qualité de l'interface d'assemblage cellule/substrat afin de détecter d'éventuels défauts de type voids.

Il existe principalement deux techniques de détection de voids dans l'interface d'assemblage entre cellule et substrat :

- la tomographie par rayon X ;
- l'imagerie par Infra-Rouge.

La première technique donne d'excellents résultats mais nécessite un appareillage lourd et coûteux. La deuxième technique requiert un temps de stabilisation thermique important et s'avère donc peu compatible avec les contraintes d'une fabrication industrielle.

Le document N. Bosco et al. "CPV Cell Infant Mortality Study", 7th International Conférence on Concentrating Photovoltaic Systems (CPV-7),Las Vegas, Nevada, April 4-6, 2011 divulgue deux procédés qui permettent la détection de voids formés dans la couche époxy de fixation d'une cellule photovoltaïque à un substrat. Le premier procédé consiste en la capture d'une image infrarouge alors que la cellule est alimentée par un courant, les variations relevées dans l'image étant causées par les variations de résistance thermique dues aux trous d'air. Le second procédé est un procédé de tomographie par rayons X.

La présente invention vient améliorer la situation.

A cet effet, elle concerne un procédé de contrôle de la qualité d'un dispositif photovoltaïque comprenant une cellule photovoltaïque assemblée à un substrat par l'intermédiaire d'une interface d'assemblage, comprenant les étapes suivantes de :

- injection d'un courant électrique à travers la cellule photovoltaïque;
- acquisition d'un signal de mesure de radiations lumineuses émises par la cellule photovoltaïque, par électroluminescence, en réponse au courant injecté ;

caractérisé en ce que le courant d'injection est un premier courant ayant une densité supérieure à un seuil de courant prédéfini de détection de défauts d'assemblage, et il est prévu une étape de détection d'au moins un défaut dans l'interface d'assemblage à partir dudit signal de mesure acquis.

Une cellule photovoltaïque a pour fonction principale de convertir des photons en électrons, autrement dit de convertir la lumière incidente en électricité. A l'inverse, lorsque la cellule est polarisée, elle émet de la lumière, à une ou plusieurs longueurs d'onde prédéfinies par le nombre de jonctions p-n que contient la cellule ainsi que par les matériaux qui composent ces jonctions, en réponse au courant qui la traverse. Il s'agit là d'un phénomène d'électroluminescence qui résulte de la recombinaison radiative d'électrons injectés et de trous électroniques dans la matière, produisant des photons. Cependant, seule une partie des électrons injectés sont convertis en photons. L'excédent d'électrons, non convertis en photons, se recombinent de façon non radiative, provoquant ainsi un échauffement de la cellule, parfois très important.

Il est connu, notamment par le document EP2343534, d'utiliser la propriété d'électroluminescence d'une cellule photovoltaïque pour détecter des défauts de structure de la cellule elle-même.

La présente invention utilise également la propriété d'électroluminescence de la cellule photovoltaïque. Cependant, dans l'invention, cette propriété d'électroluminescence de la cellule est utilisée, de façon surprenante, pour détecter des défauts présents non pas dans la cellule elle-même mais dans l'interface d'assemblage entre la cellule et le substrat. L'invention repose sur un phénomène de modification du comportement électroluminescent de la cellule lié à un défaut dans l'interface d'assemblage, nouvellement constatés par les inventeurs. En effet, dans la cellule, lorsque le courant injecté est suffisamment fort, à l'endroit situé au droit du défaut dans l'interface d'assemblage, on peut observer une augmentation de l'intensité de la (ou des) radiation(s) lumineuse(s) émise(s) par la cellule, par électroluminescence. Un défaut, tel qu'une lacune, également appelée trou d'air ou « void », de l'interface d'assemblage entre la cellule et le substrat a donc un impact sur le comportement électroluminescent de la cellule à l'endroit situé au droit de ce défaut. L'invention utilise de façon astucieuse ce phénomène pour détecter et positionner des défauts, en particulier des lacunes, dans l'interface d'assemblage, par injection d'un courant adapté.

Avantageusement, le seuil de détection de défauts d'assemblage est égal à 1 A.cm$^{-2}$.

Avec un courant de densité supérieure à 1 A/cm$^2$, on peut discerner aisément la position d'un défaut dans l'interface d'assemblage pour certains types de dispositifs photovoltaïques. Plus le courant injecté est fort, plus le défaut est visible dans l'image acquise. La valeur maximale du courant d'injection peut être de l'ordre de plusieurs dizaines d'ampères, voire davantage. En toute hypothèse, le courant d'injection doit être inférieur à une valeur maximale pour laquelle il entraînerait une détérioration soit de l'interface d'assemblage (par exemple par fusion de l'interface du fait d'un échauffement trop important de la cellule), soit de la cellule (par exemple par emballement thermique). Cette valeur supérieure maximale du courant d'injection dépend des caractéristiques physiques de la cellule et de l'interface d'assemblage.

À partir du signal de mesure acquis, on peut former une image représentative d'une surface d'émission de la cellule photovoltaïque, chaque pixel d'image étant caractérisé par une grandeur physique mesurée relative à des radiations lumineuses émises par la cellule en réponse au courant injecté.

L'acquisition peut s'effectuer très rapidement par une prise d'image ponctuelle.

Avantageusement, le premier courant est injecté sous la forme d'une impulsion d'une durée prédéterminée. Avantageusement encore, la durée de l'impulsion de courant est comprise entre 1 ms et 10 s.

L'étape injection peut ainsi consister à appliquer une simple impulsion de courant à la cellule.

L'acquisition du signal de radiation est avantageusement synchronisée avec cette étape d'injection. Le signal de radiation est de préférence acquis durant l'injection d'une impulsion de courant, même très brève, entraîne de façon instantanée ou quasi-instantanée :

- d'une part, une émission de lumière par la cellule, par recombinaison radiative d'une partie des électrons injectés, et
- d'autre part, un échauffement de la cellule, par recombinaison non radiative de l'excédent d'électrons.

L'injection d'une impulsion de courant suffit pour détecter un éventuel défaut dans l'interface d'assemblage à partir du signal de radiations lumineuses acquis. Ainsi, de façon surprenante, pour détecter un éventuel défaut de l'interface d'assemblage, il n'est pas nécessaire d'injecter le courant pendant une durée suffisamment longue pour permettre à la cellule d'étaler le flux de chaleur imposé par l'injection d'électrons à l'ensemble de la chaîne thermique, ni d'attendre une stabilisation thermique de celle-ci.

Le procédé de l'invention peut comprendre tout ou partie des caractéristiques additionnelles suivantes :

- le procédé comprend une opération de traitement de l'image acquise, lors de laquelle on détecte au moins une zone d'image correspondant à un pic de ladite grandeur physique mesurée, à l'intérieur de laquelle les pixels d'image sont caractérisés par des grandeurs physiques mesurées supérieures à un seuil prédéterminé ;
- l'opération de traitement comprend une étape de seuillage qui produit une image dont les pixels sont associés à l'une ou l'autre de deux valeurs prédéterminées, selon que la grandeur physique mesurée caractérisant le pixel considéré est inférieure ou supérieure à un seuil prédéfini ;
- l'opération de traitement comprend une étape de reconnaissance de forme dans l'image pour détecter au moins une zone en forme d'ellipse ;
- le procédé comprend en outre une étape d'injection d'un deuxième courant électrique à travers la cellule photovoltaïque, ledit deuxième courant ayant une densité inférieure audit seuil de courant prédéfini, suivie d'une étape d'acquisition d'un signal de mesure relatif aux radiations lumineuses émises par la cellule photovoltaïque, par électroluminescence, en réponse au deuxième courant injecté et d'une étape de détection d'au moins un défaut dans la cellule à partir du signal de mesure acquis en réponse à l'injection du deuxième courant ;
- le dispositif photovoltaïque à contrôler appartenant à un lot d'une pluralité de dispositifs photovoltaïques, on sélectionne un sous-ensemble de dispositifs dans le lot, on réalise des essais de qualification par tomographie par rayons x sur les dispositifs photovoltaïques sélectionnés afin d'obtenir une cartographie des défauts d'assemblage, on réalise des tests sur les dispositifs sélectionnés en injectant différentes valeurs de courant, on détermine à partir de quelle valeur limite de courant les défauts d'assemblage observés par tomographie apparaissent également par électroluminescence et on en déduit ledit seuil de courant de détection de défauts d'assemblage.

L'invention concerne aussi un système de contrôle de la qualité d'un dispositif photovoltaïque comprenant une cellule photovoltaïque assemblée à un substrat par l'intermédiaire d'une interface d'assemblage, comprenant:

- un dispositif d'injection d'un courant électrique à travers la cellule photovoltaïque;
- un dispositif d'acquisition d'un signal de mesure de radiations lumineuses émises par la cellule photovoltaïque, par électroluminescence, en réponse au courant injecté ;

caractérisé en ce que le dispositif d'injection est adapté pour injecter un premier courant ayant une densité supérieure à un seuil de courant prédéfini de détection de défauts d'assemblage et ayant une densité supérieure à $1A.cm^{-2}$, et en ce qu'il comprend en outre un dispositif de traitement du signal acquis adapté pour détecter au moins un défaut dans l'interface d'assemblage à partir dudit signal acquis.

L'invention sera mieux comprise à l'aide de la description suivante d'un mode de réalisation particulier du procédé et du système de détection de l'invention, en référence aux dessins annexés sur lesquels :

- la figure 1 représente une illustration du phénomène d'électroluminescence appliqué, à titre d'exemple illustratif, à une cellule photovoltaïque triple jonction ;
- la figure 2 représente une cellule photovoltaïque montée sur une chaîne de dissipation thermique, selon un exemple de réalisation particulier ;
- la figure 3 représente un exemple de réalisation d'une installation d'acquisition d'un signal de mesure de radiations lumineuses émises par électroluminescence par une cellule ;
- la figure 4 représente un schéma bloc fonctionnel du système de contrôle de qualité de l'invention, selon un exemple particulier de réalisation ;
- la figure 5 représente un organigramme des étapes du procédé de contrôle de qualité de l'invention, selon un premier mode particulier de réalisation ;
- la figure 6 représente un organigramme des étapes du procédé de contrôle de qualité de l'invention, selon un deuxième mode particulier de réalisation ;
- les figures 7A et 7B représentent des images obtenues à partir de radiations émises par électroluminescence par une cellule assemblée à un substrat par l'intermédiaire d'une interface, par mise en oeuvre du procédé de la figure 6, respectivement avant et après traitement.

Une cellule photovoltaïque a pour fonction principale de convertir une lumière incidente en électricité, autrement dit de convertir des photons en électrons. A l'inverse, lorsqu'un courant est injecté à travers la cellule, par polarisation de celle-ci, la cellule émet des radiations lumineuses par électroluminescence. Ce phénomène est le résultat de la recombinaison radiative d'une partie des électrons injectés et de trous électroniques dans la matière produisant des photons.

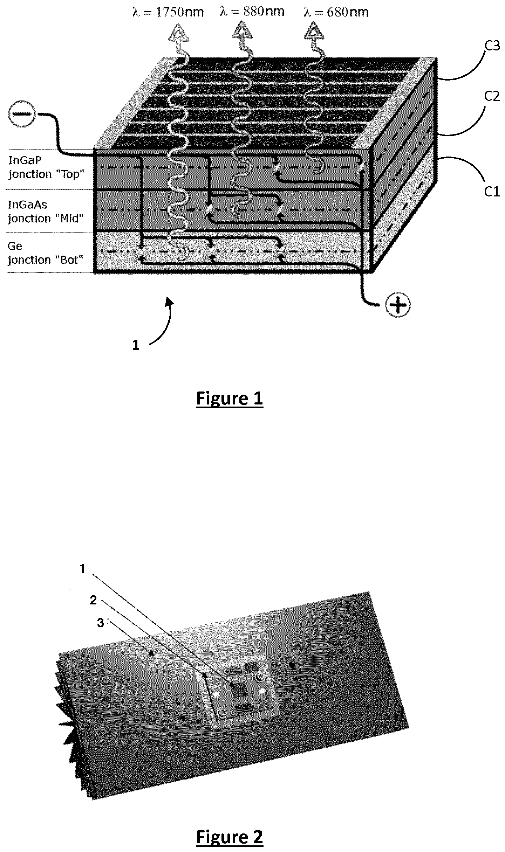

Le phénomène d'électroluminescence est illustré à titre d'exemple sur la figure 1 dans le cas particulier d'une cellule photovoltaïque triple jonction 1. Cette cellule triple jonction 1 comporte trois couches (ou jonctions) minces superposées, C1, C2 et C3, appelées «Bot » pour la couche basse C1, « Mid » pour la couche intermédiaire C2 et « Top » pour la couche haute C3. Dans l'exemple particulier de la figure 1, les couches C1, C2 et C3 sont constituées des semi-conducteurs Ge, InGaAs et InGaP respectivement. Lorsque la cellule 1 est polarisée, comme représenté par les signes « + » et « - » sur la figure 1, les trois couches C1, C2 et C3 émettent des radiations lumineuses respectivement à trois longueurs d'onde spécifiques $\lambda_1=1750$ nm, $\lambda_2=880$ nm, $\lambda_3=680$ nm. Ces trois longueurs d'onde $\lambda_1, \lambda_2, \lambda_3$ caractérisent la cellule 1.

Seule une partie des électrons injectés dans une cellule photovoltaïque produisent des photons par électroluminescence. Les électrons injectés qui ne se recombinent pas de façon radiative produisent un dégagement de chaleur. Pour évacuer cette chaleur, la cellule photovoltaïque est montée sur une chaîne de dissipation thermique. Un exemple de réalisation d'une telle chaîne thermique est représenté sur la figure 2. La chaîne thermique représentée comporte :

- un substrat 2, sur lequel la cellule 1 est montée par l'intermédiaire d'une interface d'assemblage (non apparente sur la figure 2), réalisée ici par brasure,
- un dissipateur thermique 3, sur lequel le substrat 2 est monté.

Le terme « assemblage » désigne la réunion d'entités initialement séparées, en l'espèce le substrat 2 et la cellule 1.

L'interface d'assemblage constitue un élément critique de cette chaîne thermique. Lors de la réalisation de cette interface, ici par fusion de la brasure, des défauts tels que des trous ou lacunes d'air, couramment appelés « voids », sont susceptibles de se former. Il se peut également que, lors de la réalisation de l'interface d'assemblage, un corps étranger se place dans l'interface. Ce corps est susceptible de dégrader de façon significative l'efficacité de la chaîne thermique si sa conductivité thermique est trop faible. Lors du fonctionnement de la cellule, ces défauts (lacunes/voids ou corps étrangers de faible conductivité thermique) induisent une surchauffe locale et, par conséquent, diminuent l'efficacité de la chaîne thermique.

Le procédé et le système de contrôle de qualité de l'invention permettent de détecter de tels défauts situés dans l'interface d'assemblage entre une cellule photovoltaïque et son substrat. Il peut être mis en oeuvre lors d'une phase de contrôle de qualité d'une cellule photovoltaïque assemblée à son substrat, par exemple en fin de processus de fabrication d'un récepteur, module ou panneau photovoltaïque contenant une pluralité de cellules.

Le procédé est mis en oeuvre par un système de contrôle de qualité se composant des trois entités suivantes :

- une installation E1 d'acquisition d'un signal de mesure de radiations lumineuses émises par la cellule, par électroluminescence, en réponse à un courant injecté à travers celle-ci,
- un dispositif E2 de traitement du signal de mesure acquis et
- un dispositif de commande E3.

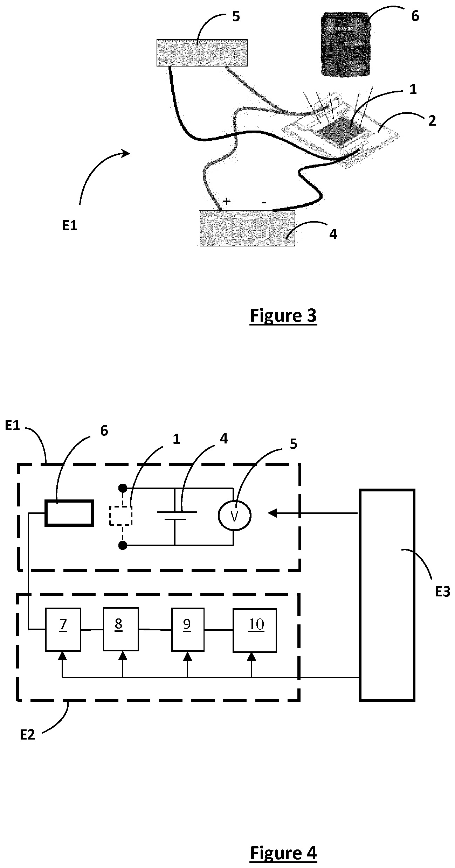

L'installation d'acquisition E1, dont un exemple de réalisation est représenté sur la figure 3, comporte une source 4 d'alimentation en tension continue, un voltmètre 5 de contrôle de la tension appliquée et un dispositif d'imagerie 6.

La source d'alimentation 4 est destinée à être connectée aux bornes de la cellule photovoltaïque et à polariser celle-ci, de manière à injecter un courant à travers la cellule. La cellule photovoltaïque possède une caractéristique courant-tension propre, analogue à celle d'une diode. La valeur de la tension appliquée aux bornes de la cellule détermine donc la valeur du courant injecté à travers celle-ci. Le voltmètre 5 est destiné à contrôler la tension appliquée aux bornes de la cellule. Le voltmètre 5 est facultatif si l'affichage des valeurs de tensions sur l'alimentation 4 est suffisamment précis.

En fonctionnement, sous la commande du dispositif de commande E3, la source 4 applique aux bornes de la cellule à contrôler :

a) une première tension $V_1$ adaptée pour injecter à travers la cellule un premier courant $I_1$, dit « fort »,
b) et éventuellement une deuxième tension $V_2$ adaptée pour injecter à travers la cellule un deuxième courant $I_2$ dit « faible ».

Dans le premier cas a), la valeur $I_1$ de courant injecté permet de détecter un ou plusieurs défauts dans l'interface d'assemblage entre la cellule et son substrat.
Dans le deuxième cas b), la valeur $I_2$ de courant injecté permet de détecter un ou plusieurs défauts dans la cellule elle-même.
Par convention, un courant est dit « fort » s'il est supérieur à une valeur limite donnée et il est dit « faible » s'il est inférieur à la valeur limite. Cette valeur limite correspond à un seuil de courant déterminé de détection de défauts d'assemblage. Autrement dit, lorsqu'un courant injecté est supérieur à ce seuil, il permet de détecter des défauts d'assemblage par le procédé de l'invention, comme cela sera explicité plus loin. Cette valeur limite, ou seuil, de courant est ici égale à 1 A.cm$^{-2}$. Toutefois, elle dépend du type de cellule et de substrat utilisés. Elle peut être déterminée lors d'une étape de configuration préalable appliquée à un nombre limité de dispositifs photovoltaïques analogues à celui ou ceux à contrôler. Par exemple, dans le cas d'un contrôle de qualité portant sur un lot de N dispositifs photovoltaïques, on sélectionne un sous-ensemble de dispositifs dans le lot, par exemple x% des N dispositifs du lot ou un nombre limité p de dispositifs du lot. Dans un premier temps, on réalise des essais de qualification par tomographie par rayons x sur les dispositifs photovoltaïques sélectionnés afin d'obtenir une cartographie des défauts d'assemblage. Dans un deuxième temps, on réalise des tests sur les dispositifs sélectionnés en injectant différentes valeurs de courant et on détermine à partir de quelle valeur limite de courant les défauts d'assemblage observés par tomographie apparaissent également par électroluminescence, par application du procédé de contrôle de qualité de l'invention, dont un mode de réalisation particulier est décrit plus loin. On en déduit le seuil de courant permettant la détection de défauts d'assemblage, correspondant à la valeur limite de courant ainsi déterminée.

Le dispositif d'imagerie spectrale 6 est apte à acquérir un signal spectral de mesure de radiations lumineuses émises par électroluminescence, en réponse à un courant injecté, par les différents points ou élément de surface de la surface d'émission de la cellule. Plus précisément, en fonctionnement, le dispositif 6 mesure une grandeur physique, ici l'intensité lumineuse, relative à des radiations émises par des éléments de surface d'émission de la cellule. Le dispositif d'imagerie peut être par exemple une caméra hyperspectrale, munie d'une matrice de capteurs aptes à mesurer un nombre de photons. En variante, il peut s'agir d'une caméra apte à mesurer l'intensité de radiations lumineuses dans une bande spectrale moins étendue, couvrant au moins l'une des longueurs d'onde caractérisant cette cellule, ou encore un spectromètre. En toute hypothèse, le signal de mesure acquis par le dispositif 6 permet de former ici une image 2D (c'est-à-dire à deux dimensions) représentant la surface d'émission de la cellule considérée. Chaque pixel d'image, correspondant à un point ou élément de surface de la surface d'émission, est caractérisé par une valeur représentative de l'intensité lumineuse des radiations lumineuses détectées. Dans l'image 2D formée, les intensités lumineuses des différents pixels peuvent être représentées par exemple par des couleurs ou des dégradés de couleur. A la place d'une représentation de la surface d'émission en 2D, on pourrait envisager une représentation, ou image, en 3D (c'est-à-dire en trois dimensions) dans laquelle l'intensité lumineuse associée à un élément de surface serait représentée en utilisant une troisième dimension.

Des filtres peuvent être associés au dispositif d'imagerie 6, notamment à la caméra hyperspectrale, pour sélectionner dans le signal à large spectre acquis une ou plusieurs bande(s) spectrale(s) étroite(s) calée(s) sur la ou les longueurs d'onde caractérisant la cellule à contrôler. Chaque pixel d'image est ainsi caractérisé par une valeur d'intensité lumineuse correspondant à l'intensité lumineuse des radiations émises aux longueur(s) d'onde filtrées.

Le dispositif de traitement E2 est destiné à traiter une image des radiations lumineuses émises par la cellule prise par la caméra. Il comprend :

- un module 7 de correction des effets de bord ;
- un module de seuillage 8 ;
- un module de reconnaissance de forme 9 ;
- un module de détection 10.

Le fonctionnement et les rôles respectifs de ces différents modules 7-10 apparaîtront de façon plus détaillée dans la description du procédé.

Le dispositif de commande E3 est connecté aux différents éléments du système et destiné à commander le fonctionnement de ces éléments, comme cela sera explicité dans la description du procédé de détection.

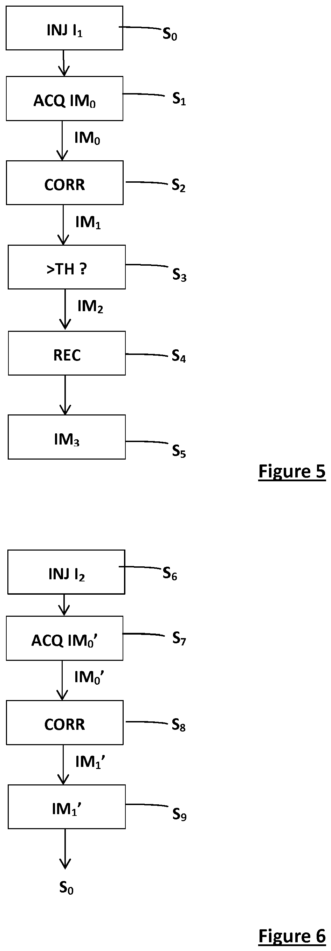

On va maintenant décrire, en référence à la figure 5, un premier mode de réalisation du procédé de contrôle de qualité de l'invention. Ce premier mode de réalisation vise à détecter des défauts dans l'interface d'assemblage entre une cellule photovoltaïque et son substrat. A titre d'exemple illustratif, le procédé est appliqué pour la détection de défaut(s) dans l'interface d'assemblage entre la cellule 1 et son substrat 2.

Lors d'une étape S0 d'injection d'un courant, la cellule 1, d'une surface de 1cm$^2$ dans cet exemple particulier et purement illustratif, est polarisée par application d'une tension $V_1$ par la source 5, permettant d'obtenir un courant d'injection fort $I_1$ d'une valeur souhaitée. Par exemple, compte tenu de la caractéristique courant-tension de la cellule 1, la tension $V_1$ peut être égale à 3,3 V et le courant d'injection $I_1$ résultant égal à 15 A. Avec une telle valeur de courant, la température de la cellule 1 peut atteindre une température d'environ 100°C. La tension $V_1$ est appliquée sous forme d'une impulsion, ou pic, de courte durée $\Delta T$. La valeur $\Delta T$ est comprise entre 1ms et 10s. Cette durée $\Delta T$ correspond à une fenêtre temporelle d'injection du courant $I_1$ à travers la cellule 1. On notera que la durée $\Delta T$ étant très brève, le contrôle de qualité est peu consommateur en temps et par conséquent facilement utilisable pour contrôler la qualité de l'interface d'assemblage cellule-substrat en fin de fabrication.

En réponse au courant fort $I_1$ injecté, la cellule 1 émet des radiations lumineuses, par électroluminescence, aux longueurs d'onde $\lambda_1$=1750 nm, $\lambda_2$=880 nm,

$\lambda_3$=680 nm, caractérisant la cellule 1.

L'étape S0 d'injection du courant $I_1$ est suivie d'une étape S1 d'acquisition d'un signal de mesure relatif aux radiations lumineuses émises par la cellule 1 en réponse au courant $I_1$ injecté. Lors de cette étape S1, le dispositif d'imagerie 6 acquiert un signal de mesure de l'intensité lumineuse des radiations lumineuses émises par la cellule 1. Dans l'exemple particulier décrit ici, le dispositif 6 fonctionne dans une large bande spectrale couvrant les trois longueurs d'onde $\lambda_1$=1750 nm, $\lambda_2$=880 nm et $\lambda_3$=680 nm. Il détecte donc les radiations émises par les trois couches C1, C2 et C3 de la cellule triple jonction 1. Le signal acquis par le dispositif 6 forme une image 2D (c'est-à-dire à deux dimensions), notée $IM_0$, représentant la surface d'émission lumineuse de la cellule 1. Chaque pixel d'image est caractérisé par une valeur d'intensité lumineuse des radiations émises par un point ou élément de surface correspondant de la surface d'émission de la cellule 1 et détectées par le dispositif d'imagerie 6.

Lors d'une étape S2, le module de correction 7 effectue une opération de correction d'effets de bord sur l'image $IM_0$. En effet, le courant $I_1$ est injecté dans la cellule 1 par le biais de bus-barres (de l'anglais « bus bars ») s'étendant le long de deux bords opposés de la cellule 1. Il en résulte que la densité d'électrons, et donc de photons produits, est plus importante au voisinage de ces bords. L'intensité des radiations lumineuses émises par la cellule est donc plus forte au voisinage des bords où sont situés les bus-barres. C'est ce que l'on appelle ici les « effets de bord ». Le module de correction 7 corrige ces effets de bord en divisant chaque ligne de pixel de l'image par la moyenne de la projection de l'image sur l'axe perpendiculaire aux bus-barres. L'image corrigée est notée $IM_1$. Chaque pixel de l'image $IM_1$ est caractérisé par une valeur d'intensité lumineuse, éventuellement corrigée selon la position du pixel.

Lors d'une étape S3, le module de seuillage 8 réalise une opération de seuillage des pixels de l'image corrigée $IM_1$. L'opération consiste, pour chaque pixel d'image, à déterminer si la valeur d'intensité caractérisant ce pixel est supérieure ou inférieure à un seuil prédéterminé TH d'intensité lumineuse. Ce seuil peut être déterminé manuellement ou par apprentissage à partir d'une calibration par échantillonnage de la production. Si la valeur d'intensité lumineuse du pixel est inférieure au seuil TH, une première valeur, ici zéro, est affectée au pixel. Si la valeur d'intensité lumineuse du pixel est supérieure au seuil TH, une deuxième valeur, ici un, est affectée au pixel. Ainsi, à l'issue de l'étape de seuillage, on obtient une image 2D, notée $IM_2$, de pixels ayant soit la valeur « 0 », soit la valeur « 1 », les pixels à « 1 » correspondant à des points de la cellule 1 où l'intensité lumineuse mesurée est la plus forte. Les pixels de valeur 1 correspondent à des pics d'intensité lumineuse.

Il est connu qu'une lacune (ou un « void ») présente une forme d'ellipsoïde. Dans l'image seuillée $IM_2$ obtenue à l'issue de l'étape de seuillage S3, un « void » a donc sensiblement un contour en forme d'ellipse, contenant des pixels de valeur 1. L'étape de seuillage S3 est suivie d'une étape de reconnaissance de forme S4, mise en oeuvre par le module 9 sur l'image seuillée IM$_2$. Lors de cette étape S4, le module 9 identifie toute forme d'ellipse formée par des pixels de valeur 1 dans l'image seuillée IM$_2$.

Lors d'une étape S5, le module 10 détecte les lacune(s), ou « void(s) »,, correspondant aux zones en forme d'ellipse détectées lors de l'étape S2 et produit une cartographie 2D, notée IM$_3$, de la surface d'émission de la cellule 1 faisant apparaître la ou les lacune(s), ou « void(s) », détectée(s).

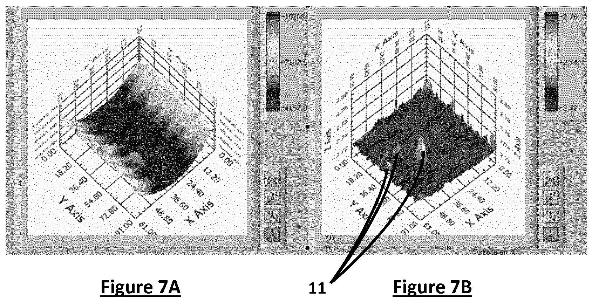

Les figures 7A et 7B représentent respectivement l'image IM$_0$, c'est-à-dire avant traitement, et l'image IM$_3$, c'est-à-dire après traitement. Les intensités lumineuses sont représentées par des dégradés de gris. Sur la figure 7B, les lacunes détectés, notées 11, sont représentées par des zones plus claires que le reste de l'image.

On soulignera ici que la réponse électroluminescente de la cellule 1 en cas d'injection d'un courant fort (en l'espèce supérieur à 1 A.cm$^{-2}$) permet de détecter des défauts présents dans l'interface d'assemblage entre la cellule 1 et son substrat 2. Cela résulte du fait qu'un défaut dans l'interface d'assemblage a pour effet de modifier le comportement électroluminescent de la cellule 1 elle-même. A l'endroit de la cellule 1 situé au droit du défaut dans l'interface d'assemblage, il se produit une augmentation de l'intensité des radiations lumineuses λ$_1$, λ$_2$ et λ$_3$ émises par la cellule 1 par électroluminescence. Tout défaut de type lacune (ou « void ») dans l'interface d'assemblage a un impact sur les propriétés physiques de la cellule 1 et, par conséquent, sur le comportement de celle-ci en électroluminescence. Ainsi, une lacune (ou « void ») dans l'interface produit une hétérogénéité dans l'émission de radiations lumineuses de la cellule par électroluminescence. L'intensité lumineuse émise est plus intense à l'endroit de la cellule sous lequel se situe une lacune, au niveau de l'interface d'assemblage.

Le procédé de l'invention consiste ainsi à cartographier l'intensité d'émission de radiations lumineuses de la cellule et à y détecter des hétérogénéités d'émission dues à la présence de voids (ou lacunes) dans l'interface d'assemblage entre cette cellule et son substrat.

La cellule elle-même peut également contenir des défauts (tels que des « shunts » - c'est-à-dire des zones de passage préférentiel du courant -, des rayures, des fissures, ou autres) susceptibles d'entraîner une surchauffe locale de la cellule et des défaillances de celle-ci, voire la destruction de la cellule.

Dans un deuxième mode de réalisation du procédé de l'invention, on détecte, d'une part, d'éventuels défauts structuraux dans la cellule par injection d'un courant faible I$_2$ et, d'autre part, d'éventuels défauts dans l'interface d'assemblage de la cellule et de son substrat par injection d'un courant fort I$_1$.

Le procédé selon le deuxième mode de réalisation comprend une première phase de détection de défauts dans la cellule suivie d'une deuxième phase de détection de lacunes dans l'interface d'assemblage entre la cellule et son substrat. A titre d'exemple illustratif, le procédé est appliqué à la cellule 1, au substrat 2 et à l'interface d'assemblage.

La première phase de détection comprend une étape S6 d'injection d'un courant faible I$_2$, d'une valeur inférieure à 1 A.cm$^{-2}$, à travers la cellule 1. A cet effet, la cellule 1 est polarisée par application d'une tension V$_2$ par la source 5, permettant d'obtenir le courant faible I$_2$ de la valeur souhaitée. Par exemple, compte tenu des caractéristiques de la cellule 1, la tension V$_2$ peut être égale à 2,9 V et le courant d'injection I$_2$ égal à 500 mA. La tension V$_2$ est appliquée pendant une durée comprise entre 1ms et 10s.

En réponse au courant I$_2$ injecté, la cellule 1 émet des radiations lumineuses, par électroluminescence, aux longueurs d'onde λ$_1$=1750 nm, λ$_2$=880 nm, λ$_3$=680 nm, caractérisant la cellule 1.

L'étape S6 d'injection de courant est suivie d'une étape S7 d'acquisition d'un signal de mesure de l'intensité de radiations lumineuses émises par la cellule 1 en réponse au courant injecté I$_2$. Lors de cette étape S7, le dispositif d'imagerie 6 mesure l'intensité lumineuse des radiations émises par chaque point ou élément de surface de la surface d'émission de la cellule. Ce signal contient notamment les radiations émises aux trois longueurs d'onde λ$_1$=1750 nm, λ$_2$=880 nm et λ$_3$=680 nm émises par les trois couches C1, C2 et C3 de la cellule triple jonction 1. Le signal acquis par le dispositif 6 forme une image 2D (c'est-à-dire à deux dimensions), notée IM$_0$', représentant la surface d'émission lumineuse de la cellule 1. Chaque pixel de l'image IM$_0$' est caractérisé par une valeur d'intensité lumineuse des radiations émises par une position correspondante de la surface d'émission de la cellule 1 et détectées par le dispositif d'imagerie 6.

L'image IM$_0$' est ensuite corrigée, lors d'une étape S8 de correction d'effets de bord analogue à l'étape S2 précédemment décrite. L'image corrigée est notée IM$_1$'.

Le procédé comprend ensuite une étape S9 de détection de défauts et de génération d'une cartographie, ou image, résultante, notée IM$_1$'. L'étape S9 consiste à détecter des zones d'image dont l'émission est très différente de la moyenne d'émission de l'image, autrement dit des zones très sombres ou très claires par rapport au reste de l'image. Plus précisément, à partir des valeurs d'intensité lumineuses des pixels de l'image ici corrigée, on calcule une moyenne M d'intensité lumineuse d'émission. Puis, pour chaque pixel, on détermine si la valeur d'intensité lumineuse affectée à ce pixel s'écarte de cette moyenne M d'au moins x%, c'est-à-dire si la valeur d'intensité du pixel est située en dehors de la plage de valeurs comprise entre $\left(M - \frac{x}{100}.M\right)$ et $\left(M + \frac{x}{100}.M\right)$. Par exemple, le paramètre x peut être de l'ordre de 30%. Puis on identifie des zones d'image constituées de pixels ainsi détectés (dont la valeur d'intensité est en dehors de la plage ci-dessus). Les défauts structuraux n'ont pas de formes prédéfinies, il peut s'agir de traits, de points ou de formes quelconques. On forme ensuite l'image $IM_1'$, ou cartographie, correspondant à la surface d'émission de la cellule 1 et faisant apparaître les défauts détectés.

La première phase de détection de défauts dans la cellule 1 est suivie de la deuxième phase de détection de lacunes (ou « voids ») dans l'interface entre la cellule 1 et son substrat 2. Cette deuxième phase de détection exécute les étapes S0 à S5 telles que précédemment décrites.

On pourrait envisager de réaliser la phase de détection de lacunes dans l'interface d'assemblage avant la phase de détection de défauts dans la cellule.

## Revendications

1. Procédé de contrôle de la qualité d'un dispositif photovoltaïque comprenant une cellule photovoltaïque (1) assemblée à un substrat (2) par l'intermédiaire d'une interface d'assemblage, comprenant les étapes suivantes de :

   • injection ($S_0$) d'un courant électrique ($I_1$) à travers la cellule photovoltaïque (1);
   • acquisition ($S_1$) d'un signal ($IM_0$) de mesure de radiations lumineuses émises par la cellule photovoltaïque, par électroluminescence, en réponse au courant injecté ;

   le courant d'injection ($I_1$) étant un premier courant ayant une densité supérieure à un seuil de courant prédéfini de détection de défauts d'assemblage, et il est prévu une étape ($S_5$) de détection d'au moins un défaut dans l'interface d'assemblage à partir dudit signal de mesure acquis.

2. Procédé selon la revendication 1, **caractérisé en ce que** le seuil de détection de défauts d'assemblage est égal à 1 A.cm$^{-2}$.

3. Procédé selon l'une des revendications précédentes, **caractérisé en ce que** le premier courant ($I_1$) est injecté sous la forme d'une impulsion d'une durée prédéterminée.

4. Procédé selon la revendication précédente, **caractérisé en ce que** la durée de l'impulsion de courant est comprise entre 1 ms et 10 s.

5. Procédé selon l'une des revendications précédentes, **caractérisé en ce que** l'étape ($S_1$) d'acquisition du signal de mesure de radiations lumineuses est synchronisée avec l'étape ($S_0$) d'injection du premier courant ($I_1$).

6. Procédé selon l'une des revendications précédentes, **caractérisé en ce qu'**on forme à partir du signal de mesure acquis une image représentative ($IM_0$) d'une surface d'émission de la cellule, chaque pixel d'image étant **caractérisé par** une grandeur physique mesurée représentative de radiations lumineuses émises par un élément de surface correspondant de la cellule.

7. Procédé selon la revendication 6, **caractérisé en ce qu'**il comprend une opération (S3-S4) de traitement de l'image acquise, lors de laquelle on détecte au moins une zone d'image correspondant à un pic de ladite grandeur physique mesurée, à l'intérieur de laquelle les pixels d'image sont **caractérisés par** des grandeurs physiques mesurées supérieures à un seuil prédéterminé (TH).

8. Procédé selon la revendication précédente, **caractérisé en ce que** l'opération de traitement comprend une étape de seuillage (S3) qui produit une image dont les pixels sont associés à l'une ou l'autre de deux valeurs prédéterminées, selon que la grandeur physique mesurée caractérisant le pixel considéré est inférieure ou supérieure à un seuil prédéfini.

9. Procédé selon la revendication 7 ou 8, **caractérisé en ce que** l'opération de traitement comprend une étape (S4) de reconnaissance de forme dans l'image pour détecter au moins une zone en forme d'ellipse.

10. Procédé selon l'une des revendications précédentes, **caractérisé en ce qu'**il comprend en outre une étape ($S_6$) d'injection d'un deuxième courant électrique ($I_2$) à travers la cellule photovoltaïque, ledit deuxième courant ($I_2$) ayant une densité inférieure audit seuil de courant prédéfini, suivie d'une étape ($S_7$) d'acquisition d'un signal de mesure relatif aux radiations lumineuses émises par la cellule photovoltaïque, par électroluminescence, en réponse au deuxième courant injecté ($I_2$) et d'une étape ($S_{11}$) de détection d'au moins un défaut dans la cellule (1) à partir du signal de mesure acquis en réponse à l'injection du deuxième courant ($I_2$).

11. Procédé selon l'une des revendications précédentes, **caractérisé en ce que**, le dispositif photovoltaïque à contrôler appartenant à un lot d'une pluralité de dispositifs photovoltaïques, on sélectionne un sous-ensemble de dispositifs dans le lot, on réalise des essais de qualification par tomographie par rayons x sur les dispositifs photovoltaïques sélectionnés afin d'obtenir une cartographie des défauts d'assemblage, on réalise des tests sur les dispositifs sélectionnés en injectant différentes valeurs de courant, on détermine à partir de quelle valeur limite de courant les défauts d'assemblage observés par tomographie apparaissent également par électroluminescence et on en déduit ledit seuil de courant de détection de défauts d'assemblage.

12. Système de contrôle de la qualité d'un dispositif photovoltaïque comprenant une cellule photovoltaïque (1) assemblée à un substrat (2) par l'intermédiaire d'une interface d'assemblage, comprenant:

    • un dispositif (5, E3) d'injection d'un courant électrique à travers la cellule photovoltaïque (1);
    • un dispositif (6) d'acquisition d'un signal de mesure de radiations lumineuses émises par la cellule photovoltaïque, par électroluminescence, en réponse au courant injecté ;

le dispositif d'injection (5) étant est adapté pour injecter un premier courant ayant une densité supérieure à un seuil de courant prédéfini de détection de défauts d'assemblage et ayant une densité supérieure à $1A.cm^{-2}$, et le système comprenant en outre un dispositif (E2) de traitement du signal acquis adapté pour détecter au moins un défaut dans l'interface d'assemblage à partir dudit signal acquis.

13. Système selon la revendication 12, **caractérisé en ce que** le dispositif d'injection (5, E3) est adapté pour injecter une impulsion de courant d'une durée comprise entre 1 ms et 10 s.

14. Système selon l'une des revendications 12 et 13, **caractérisé en ce que** le dispositif d'injection (5, E3) et le dispositif d'acquisition (6) sont adaptés pour synchroniser l'injection de courant et l'acquisition du signal de mesure.

**Patentansprüche**

1. Verfahren zur Kontrolle der Qualität einer Fotovoltaikvorrichtung, die eine fotovoltaische Zelle (1) umfasst, die mittels einer Montagegrenzfläche auf einem Träger (2) montiert ist, wobei das Verfahren die folgenden Schritte umfasst:

    • Injektion ($S_0$) eines elektrischen Stroms ($I_1$) in die fotovoltaische Zelle (1);
    • Erfassung ($S_1$) eines Signals ($IM_0$) zur Messung der Lichtstrahlung, die von der fotovoltaischen Zelle durch Elektrolumineszenz als Reaktion auf den injizierten Strom emittiert wird;

wobei der Injektionsstrom ($I_1$) ein erster Strom ist, der eine Dichte aufweist, die größer als ein vorab definierter Schwellenwert eines Stroms zur Detektion von Montagefehlern ist, und ein Schritt ($S_5$) der Detektion mindestens eines Fehlers in der Montagegrenzfläche auf Grundlage des erfassten Messsignals vorgesehen ist.

2. Verfahren nach Anspruch 1, **dadurch gekennzeichnet, dass** der Schwellenwert zur Detektion von Montagefehlern gleich $1 A.cm^{-2}$ ist.

3. Verfahren nach einem der vorhergehenden Ansprüche, **dadurch gekennzeichnet, dass** der erste Strom ($I_1$) in Form eines Stoßes mit einer vorab festgelegten Dauer injiziert wird.

4. Verfahren nach dem vorhergehenden Anspruch, **dadurch gekennzeichnet, dass** die Dauer des Stromstoßes zwischen 1 ms und 10 s liegt.

5. Verfahren nach einem der vorhergehenden Ansprüche, **dadurch gekennzeichnet, dass** der Schritt ($S_1$) der Erfassung des Signals zur Messung der Lichtstrahlung mit dem Schritt ($S_0$) der Injektion des ersten Stroms ($I_1$) synchronisiert ist.

6. Verfahren nach einem der vorhergehenden Ansprüche, **dadurch gekennzeichnet, dass** auf Grundlage des erfassten Messsignals ein repräsentatives Bild ($IM_0$) einer Emissionsfläche der Zelle gebildet wird, wobei jedes Bildpixel **gekennzeichnet ist durch** eine gemessene physikalische Größe die für die Lichtstrahlung, die von einem entsprechenden Flächenelement der Zelle emittiert wird, repräsentativ ist.

7. Verfahren nach Anspruch 6, **dadurch gekennzeichnet, dass** es einen Vorgang (S3-S4) der Verarbeitung des erfassten Bilds umfasst, bei dem mindestens ein Bildbereich detektiert wird, der einer Spitze der gemessenen physikalischen Größe entspricht und in dem die Bildpixel durch gemessene physikalische Größen gekennzeichnet sind, die größer als ein vorab festgelegter Schwellenwert (TH) sind.

8. Verfahren nach dem vorhergehenden Anspruch, **dadurch gekennzeichnet, dass** der Verarbeitungsvorgang einen Schritt der Schwellenwertermittlung (S3) umfasst, der ein Bild erzeugt, dessen Pixel dem einen oder anderen von zwei vorab festgelegten Werten zugeordnet sind, je nachdem, ob die gemessene physikalische Größe, die das betreffende Pixel kennzeichnet, kleiner oder größer als ein vorab definierter Schwellenwert ist.

9. Verfahren nach Anspruch 7 oder 8, **dadurch ge-**

**kennzeichnet, dass** der Verarbeitungsvorgang einen Schritt (S4) der Formenerkennung im Bild umfasst, um mindestens einen Bereich in Form einer Ellipse zu detektieren.

10. Verfahren nach einem der vorhergehenden Ansprüche, **dadurch gekennzeichnet, dass** es unter anderem einen Schritt ($S_6$) der Injektion eines zweiten elektrischen Stroms ($I_2$) in die fotovoltaische Zelle umfasst, wobei der zweite Strom ($I_2$) eine Dichte aufweist, die kleiner als der vorab definierte Stromschwellenwert ist, gefolgt von einem Schritt ($S_7$) der Erfassung eines Messsignals, das sich auf die Lichtstrahlung bezieht, die von der fotovoltaischen Zelle durch Elektrolumineszenz als Reaktion auf den zweiten injizierten Strom ($I_2$) emittiert wird, und von einem Schritt ($S_{11}$) der Detektion von mindestens einem Fehler in der Zelle (1) auf Grundlage des als Reaktion auf die Injektion des zweiten Stroms ($I_2$) erfassten Messsignals.

11. Verfahren nach einem der vorhergehenden Ansprüche, **dadurch gekennzeichnet, dass**, da die zu kontrollierende Fotovoltaikvorrichtung zu einem Satz mit einer Vielzahl von Fotovoltaikvorrichtungen gehört, eine Untergruppe von Vorrichtungen aus dem Satz ausgewählt wird, mittels Röntgentomografie Eignungsprüfungen an den ausgewählten Fotovoltaikvorrichtungen durchgeführt werden, um ein Lagebild der Montagefehler zu erlangen, an den ausgewählten Vorrichtungen Versuche durchgeführt werden, indem unterschiedliche Stromwerte injiziert werden, ermittelt wird, ab welchem Stromgrenzwert die durch Tomografie beobachteten Montagefehler auch durch Elektrolumineszenz erscheinen, und der Schwellenwert des Strams zur Detektion von Montagefehlern abgeleitet wird.

12. System zur Kontrolle der Qualität einer Fotovoltaikvorrichtung, die eine fotovoltaische Zelle (1) umfasst, die mittels einer Montagegrenzfläche auf einem Träger (2) montiert ist, wobei das System Folgendes umfasst:

   • eine Vorrichtung (5, E3) zur Injektion eines elektrischen Stroms in die fotovoltaische Zelle (1);
   • eine Vorrichtung (6) zur Erfassung eines Signals zur Messung der Lichtstrahlung, die von der fotovoltaischen Zelle durch Elektrolumineszenz als Reaktion auf den injizierten Strom emittiert wird;

   wobei die Injektionsvorrichtung (5) dazu ausgeführt ist, einen ersten Strom zu injizieren, der eine Dichte aufweist, die größer als ein vorab definierter Schwellenwert des Stroms zur Detektion von Montagefehlern ist, und der eine Dichte aufweist, die größer als

1A.cm$^{-2}$ ist, wobei das System unter anderem eine Vorrichtung (E2) zur Verarbeitung des erfassten Signals umfasst, die dazu ausgeführt ist, auf Grundlage des erfassten Signals mindestens einen Fehler in der Montagegrenzfläche zu detektieren.

13. System nach Anspruch 12, **dadurch gekennzeichnet, dass** die Injektionsvorrichtung (5, E3) dazu ausgeführt ist, einen Stromstoß mit einer Dauer zwischen 1 ms und 10 s zu injizieren.

14. System nach einem der Ansprüche 12 und 13, **dadurch gekennzeichnet, dass** die Injektionsvorrichtung (5, E3) und die Erfassungsvorrichtung (6) dazu ausgeführt sind, die Strominjektion und die Erfassung des Messsignals zu synchronisieren.

## Claims

1. Method for controlling the quality of a photovoltaic device comprising a photovoltaic cell (1) assembled with a substrate (2) by way of an assembly interface, comprising the following steps:

   - injecting ($S_0$) an electrical current ($I_1$) through the photovoltaic cell (1); and
   - acquiring ($S_1$) a signal ($IM_0$) measuring the luminous radiation emitted by the photovoltaic cell, by electroluminescence, in response to the injected current;

   the injection current ($I_1$) being a first current having a density higher than a preset assembly defect detection current threshold, and a step ($S_5$) of detecting at least one defect in the assembly interface on the basis of said acquired measuring signal is provided.

2. Method according to Claim 1, **characterized in that** the assembly defect detection threshold is equal to 1 A.cm$^{-2}$.

3. Method according to one of the preceding claims, **characterized in that** the first current ($I_1$) is injected in the form of a pulse of a preset duration.

4. Method according to the preceding claim, **characterized in that** the duration of the current pulse is comprised between 1 ms and 10 s.

5. Method according to one of the preceding claims, **characterized in that** the step ($S_1$) of acquiring the luminous radiation measuring signal is synchronized with the step ($S_0$) of injecting the first current ($I_1$).

6. Method according to one of the preceding claims, **characterized in that** from the acquired measuring signal an image ($IM_0$) representative of an emitting area of the cell is formed, each image pixel being **characterized by** a measured physical quantity representative of luminous radiation emitted by a corresponding areal element of the cell.

7. Method according to Claim 6, **characterized in that** it comprises an operation (S3-S4) of processing the acquired image, in which at least one image zone corresponding to a peak of said measured physical quantity is detected, the image pixels inside said zone being **characterized by** measured physical quantities higher than a preset threshold (TH).

8. Method according to the preceding claim, **characterized in that** the processing operation comprises a thresholding step (S3) that produces an image the pixels of which are associated with one or other of two preset values, depending on whether the measured physical quantity characterizing the pixel in question is lower or higher than a preset threshold.

9. Method according to Claim 7 or 8, **characterized in that** the processing operation comprises a step (S4) of recognizing shapes in the image in order to detect at least one ellipse-shaped zone.

10. Method according to one of the preceding claims, **characterized in that** it furthermore comprises a step ($S_6$) of injecting a second electrical current ($I_2$) through the photovoltaic cell, said second current ($I_2$) having a density lower than said preset current threshold, followed by a step ($S_7$) of acquiring a measuring signal related to the luminous radiation emitted by the photovoltaic cell, by electroluminescence, in response to the second injected current ($I_2$), and a step ($S_{11}$) of detecting at least one defect in the cell (1) on the basis of the measuring signal acquired in response to the injection of the second current ($I_2$).

11. Method according to one of the preceding claims, **characterized in that**, the photovoltaic device to be inspected belonging to a batch of a plurality of photovoltaic devices, a subset of devices is selected from the batch, qualifying tests are carried out by x-ray tomography on the selected photovoltaic devices in order to obtain a map of assembly defects, tests are carried out on the selected devices by injecting various current values, the limit current value from which the assembly defects observed by tomography also appear by electroluminescence is determined and said assembly defect detection current threshold is deduced therefrom.

12. System for controlling the quality of a photovoltaic device comprising a photovoltaic cell (1) assembled with a substrate (2) by way of an assembly interface, comprising:

- a device (5, E3) for injecting an electrical current through the photovoltaic cell (1); and
- a device (6) for acquiring a signal measuring the luminous radiation emitted by the photovoltaic cell, by electroluminescence, in response to the injected current;

the injecting device (5) being suitable for injecting a first current having a density higher than a preset assembly defect detection current threshold and having a density higher than 1 A.cm$^{-2}$, and the system furthermore comprising a device (E2) for processing the acquired signal suitable for detecting at least one defect in the assembly interface on the basis of said acquired signal.

13. System according to Claim 12, **characterized in that** the injecting device (5, E3) is suitable for injecting a current pulse of duration comprised between 1 ms and 10 s.

14. System according to one of Claims 12 to 13, **characterized in that** the injecting device (5, E3) and the acquiring device (6) are suitable for synchronising the current injection and the acquisition of the measuring signal.

$\lambda = 1750\,nm$    $\lambda = 880\,nm$    $\lambda = 680\,nm$

C3

C2

C1

InGaP
jonction "Top"

InGaAs
jonction "Mid"

Ge
jonction "Bot"

1

**Figure 1**

1

2

3

**Figure 2**

**Figure 3**

**Figure 4**

INJ $I_1$ — $S_0$

ACQ $IM_0$ — $S_1$

$IM_0$

CORR — $S_2$

$IM_1$

>TH ? — $S_3$

$IM_2$

REC — $S_4$

$IM_3$ — $S_5$

**Figure 5**

INJ $I_2$ — $S_6$

ACQ $IM_0'$ — $S_7$

$IM_0'$

CORR — $S_8$

$IM_1'$

$IM_1'$ — $S_9$

$S_0$

**Figure 6**

**Figure 7A**          11          **Figure 7B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2343534 A

**Littérature non-brevet citée dans la description**

- **N. BOSCO et al.** CPV Cell Infant Mortality Study. *7th International Conférence on Concentrating Photo-voltaic Systems (CPV-7),* 04 Avril 2011